# EUROPÄISCHE PATENTANMELDUNG

(11) **EP 3 878 985 A1**
(43) Veröffentlichungstag der Anmeldung: **15.09.2021**
(21) Anmeldenummer: 21160762.7
(22) Anmeldetag: 04.03.2021
(51) Int. Cl.: C21D 9/32, C21D 1/18, C23C 8/22

(54) **VERFAHREN UND ANORDNUNG ZUR FERTIGUNG WÄRMEBEHANDELTER WERKSTÜCKE, INSBESONDERE SCHRÄG VERZAHNTER ZAHNRÄDER**

(30) Priorität: 09.03.2020 DE 102020106257
(71) Anmelder: Areospace Trasmission Technologies GmbH, 88046 Friedrichshafen (DE)
(72) Erfinder: Tscharntke, Benjamin, 88069 Tettnang Kau (DE)
(74) Vertreter: Zöschinger, Christian

(57) **Zusammenfassung**

Die Erfindung bezieht sich auf ein Verfahren zur Fertigung wärmebehandelter Werkstücke bei welchem im Rahmen eines der Aufkohlung dienenden Verfahrensabschnittes das Werkstück aufgeheizt wird und Kohlenstoff unter Ausbildung einer Randschicht in das Werkstück eindiffundiert, das Werkstück einer Presshärtebehandlung unterzogen wird, in deren Rahmen das Werkstück gespannt und in gespanntem Zustand abgeschreckt wird, wobei die Aufkohlung Interimsgeometrien des Werkstücks erfasst, die als Absorptionszonen fungieren, die Interimsgeometrien im Rahmen nachfolgender Bearbeitungsschritte abgetragen werden, und die Presshärtebehandlung zeitlich nach der Aufkohlung des Werkstücks und ebenfalls zeitlich vor dem Abtrag der Interimsgeometrien bewerkstelligt wird. Weiterhin bezieht sich die Erfindung auch auf Zahnräder, die nach Maßgabe dieses Verfahrens gefertigt sind.

## Beschreibung

### Gebiet der Erfindung

Die Erfindung bezieht sich auf ein Verfahren und eine Anordnung zur Fertigung wärmebehandelter Werkstücke, insbesondere zur Fertigung zweireihiger, schräg verzahnter Zahnräder für ein Umlaufrädergetriebe eines Triebwerks. Weiterhin bezieht sich die Erfindung auch auf Zahnräder, die nach Maßgabe dieses Verfahrens gefertigt sind.

### Hintergrund der Erfindung

Zweireihig schräg verzahnte Zahnräder, wie sie insbesondere in Umlaufrädergetrieben von Flugzeugtriebwerken Anwendung finden, werden im Rahmen ihrer Herstellung einer Aufkohlbehandlung unterzogen, in deren Rahmen sich im Randbereich eines nahezu auf Endmaß vorgefertigten Zahnradkörpers eine Randschicht mit entsprechend erhöhtem Kohlenstoffgehalt und damit veränderten Werkstoffeigenschaften ergibt. Die derart aufgekohlten Zahnräder werden im Nachgang zu dieser Aufkohlbehandlung weiter bearbeitet. Das derart bearbeitete Zahnrad kann dann weiteren Behandlungs- und Bearbeitungsschritten zur Gefügebehandlung sowie zur Erlangung der Endgeometrie unterzogen werden.

### Aufgabe der Erfindung

Der Erfindung liegt die Aufgabe zugrunde, Lösungen aufzuzeigen, durch welche es möglich wird, wärmebehandelte Werkstücke, insbesondere durch Presshärten verzugsarm gehärtete Zahnräder zu schaffen, die sich durch einen vorteilhaften und zuverlässig reproduzierbaren Gefügeaufbau, auszeichnen und im Rahmen eines effizienten Fertigungsprozesses mit engen Toleranzen gefertigt werden können.

### Erfindungsgemäße Lösung

Diese Aufgabe wird erfindungsgemäß gelöst durch ein Verfahren zur Fertigung wärmebehandelter Werkstücke bei welchem:
- im Rahmen eines der Aufkohlung dienenden Verfahrensabschnittes das Werkstück aufgeheizt wird und Kohlenstoff unter Ausbildung einer Randschicht in das Werkstück eindiffundiert,
- das Werkstück einer Presshärtebehandlung unterzogen wird, in deren Rahmen das Werkstück gespannt und in gespanntem Zustand abgeschreckt wird, wobei
- die Aufkohlung Interimsgeometrien des Werkstücks erfasst, die als Absorptionszonen fungieren,
- die Interimsgeometrien im Rahmen nachfolgender Bearbeitungsschritte abgetragen werden und
- die Presshärtebehandlung zeitlich nach der Aufkohlung des Werkstücks und zeitlich vor dem Abtrag der Interimsgeometrien bewerkstelligt wird.

Dadurch wird es auf vorteilhafte Weise möglich, ein hochpräzises Zahnrad, insbesondere ein zweireihig schräg verzahntes Zahnrad für ein Triebwerksgetriebe zu schaffen, das über die als Aufkohlungsschutz wirksamen Interimsgeometrien in einer Presshärtematrize gespannt werden kann. Hierdurch wird es möglich, über die als Aufkohlungsschutz wirksamen Geometrien eine vorteilhafte Zentrierung und Positionierung des Werkstücks in der Matrize des Abschreckpresswerkzeuges vorzugnehmen und auch den Spannungsverlauf im Werkstück in gepresstem Zustand über die Interimsgeometrien und die Komplementärgeometrien in der Matrize abzustimmen.

In dem Verfahrensschritt der Aufkohlung, wird das vorzugsweise Doppeltschrägverzahnte-Zahnrad aufgekohlt. Bei dem Aufkohlvorgang diffundieren bei hohen Temperaturen Kohlenstoffatome in das Metall ein. Dabei wird eine harte Randschicht gebildet, wobei der Kern des Zahnrades zäh und weich bleibt.

Die Werkstückbereiche mit geringer aufgekohlter Randschicht werden erzeugt, indem dort zunächst als Aufkohlungsschutz fungierende Interimsgeometrien vorgesehen werden, die zeitlich nach der Aufkohlung spanabhebend, insbesondere durch einen Drehbearbeitungsprozess abgetragen werden.

Nach dem erfindungsgemäßen Konzept wird in gleicher Weise wie die Aufkohlung auch der Verfahrensschritt das Presshärtung unter Belassung der Interimsgeometrien am Zahnradkorpus durchgeführt. Erst im Nachgang zur Presshärtung erfolgt der Abtrag der Interimsgeometrien um hierbei das Zahnrad in den fertigungstechnischen Endzustand zu überführen.

Das erfindungsgemäße Doppeltschrägverzahnte-Zahnrad wird somit in weichem Zustand unter Bildung der Interimsgeometrien vorgedreht und anschließend aufgekohlt. Nach dem Aufkohlen wird das Zahnrad unter Belassung des Aufkohlungsschutzes in einer Härtematrize unter Nutzung der Interimsgeometrien gespannt und einer Abschreckpresshärtung unterzogen. Erst im Nachgang zu diesem Verfahrensschritt werden die Interimsgeometrien spanabhebend entfernt.

Im Gegensatz zu herkömmlichen Fertigungsverfahren muss das Zahnrad zwischen der Aufkohlung und der Abschreckpresshärtung nicht erneut spanabhebend bearbeitet und hierzu beispielsweise zwischen den einzelnen Gefügebehandlungsmaßnahmen zwischen den einzelnen Zerspanungsmaschinen transportiert werden. Des Weiteren muss es zwischen Aufkohlung und Abschreckpresshärtung nicht mehr bezüglich Planlauf und Rundlauf neu ausgerichtet werden.

Durch das erfindungsgemäße Konzept wird ein insgesamt optimiertes Bearbeitungsverfahren bereitgestellt, durch welches eine einfachere Bearbeitung möglich ist, so dass durch die Einbeziehung der Interimsgeometrien des Zahnrades in den Presshärteprozess sich insgesamt eine Prozessoptimierung ergibt.

Die erfindungsgemäße Idee sieht vor, dass der Verfahrensschritt des Aufkohlens und des Presshärtens zusammengefasst werden. Erst im Anschluss daran werden weitere Verfahrensschritte, insbesondere die Hartbearbeitungsverfahren ausgeführt, bei welchen im Bereich der Interimsgeometrien die gehärtete Oberfläche durch eine Dreh-, Fräs- und/oder Schleifbearbeitung abgetragen wird.

Gemäß einer besonders bevorzugten Ausführungsform des erfindungsgemäßen Verfahrens wird das dem Presshärten nachfolgende Hartbearbeitungsverfahren zur Entfernung der Interimsgeometrie an einem ersten Außenbereich des Zahnrades durchgeführt. Nachfolgend wird das Bauteil in der Bearbeitungsmaschine, insbesondere einer Drehmaschine umgespannt und an der zweiten Außenseite bearbeitet. Das Bauteil wird somit insgesamt nur 2-Mal neu auf der Bearbeitungsmaschine aufgespannt und muss somit insgesamt nur 2-Mal bezüglich Planlauf und Rundlauf neu ausgerichtet werden. Die Anzahl der notwendigen Rüstprozesse ist somit in vorteilhafter Weise verringert.

Die Interimsgeometrien sind gemäß einer besonders vorteilhaften Umsetzung des erfindungsgemäßen Bearbeitungsablaufs derart ausgelegt, dass deren normal zur Außenfläche gemessene Stärke wenigstens der Hälfte der Aufkohlschichtdicke entspricht. Die Interimsgeometrien können so gestaltet sein, dass über diese eine Schneidkante in den Werkstoff des Werkstücks eindringen kann und hierbei in Bereiche mit zunehmendem Kohlenstoffgehalt vordringt. Die Relativbewegungsbahn zwischen dem Werkstück und einem Schneidenträger kann hierbei eine zu einer Zentralachse des Werkstücks im wesentlichen konzentrische Kreisbahn sein, die Relativbewegungsbahn kann jedoch auch anderweitige Verläufe aufweisen, insbesondere eine partiell evolventenartige Relativbewegungsbahn sein, die im Bereich der Stirnseiten der Zahnflanken möglichst von innen heraus über die Zahnflankenkante überläuft. Hierdurch wird es möglich im Rahmen der Seitenflächenbearbeitung der Zahnräder die Schnittunterbrechung als aus dem Werkstoff auslaufende Schneidstoffrelativbewegung zu realisieren.

Gemäß einem besonderen Aspekt der vorliegenden Erfindung wird das aufgekohlte Werkstück vorzugsweise ohne Zwischenkühlung auf das zur Presshärtung vorgesehene Temperaturniveau gebracht. Die Verbringung des Werkstücks in die Presshärtematrize kann hierbei über ein Handhabungssystem automatisiert bewerkstelligt werden, so dass der Schritt der Entnahme aus dem Aufkohlbehältnis und die Einbringung in die Härtematrize mit gleichbleibender Bewegungscharakteristik erfolgt.

Gemäß einem weiteren besonderen Aspekt der vorliegenden Erfindung wird vorzugsweise das Werkstück im Rahmen der Presshärtung im Zusammenspiel mit den als Absorptionszonen fungierenden Interimsgeometrien gespannt. Hierbei kann im Zusammenspiel mit der Spannung des Werkstücks über die Interimsgeometrien ein Spaltraum in dem Presswerkzeug eingehalten werden, der von einem Abschreckmedium durchströmt wird. Die Abkühlung des Werkstücks durch direkten Kontakt mit der Härtematrize wird hierbei zudem auf die Interimszonen reduziert. Die als Kohlenstoff-Absorptionszonen fungierenden Interimsgeometrien können in vorteilhafter Weise als sich zu einer Zentralachse des Werkstücks konzentrische Ringstrukturen darstellen.

Das nach dem erfindungsgemäßen Verfahren behandelte Werkstück ist vorzugsweise ein Stirnrad und die Ringstufen erstrecken sich vorzugsweise auf einander abgewandten Stirnseiten des Stirnrades unterhalb des Fußkreises der Verzahnung.

Die eingangs angegebene Aufgabe wird gemäß einem weiteren Aspekt der vorliegenden Erfindung auch gelöst durch ein Zahnrad mit einer im Bereich der Verzahnung aufgekohlten Randschicht, sowie spanabhebend bearbeiteten Außenbereichen mit Randschichten mit geringerem Aufkohlungsgrad, wobei
- dieser geringere Aufkohlungsgrad durch Abtrag von aufgekohlten Interimsgeometrien bewerkstelligt ist und
- diese Interimsgeometrien im Rahmen einer Abschreckpresshärtung des Zahnrades noch Bestandteil desselben gebildet haben.

Das erfindungsgemäße Zahnrad hat infolge der Einbeziehung der als Aufkohlungsschutz dienenden Interimsgeometrien in den Abschreckhärtevorgang besondere Werkstückeigenschaften. So wird die Endgeometrie des Zahnrades durch Abtrag des Aufkohlungsschutzes nach Durchführung der Presshärtung erreicht. Das Zahnrad wird damit noch bis zum Abschluss der Presshärtung durch die aufgekohlten Interimsgeometrien stabilisiert.

Das erfindungsgemäße Zahnrad umfasst Randzonen, deren Aufkohlungsgrad jenem Aufkohlungsgrad entspricht, der im Rahmen der Bauteilsaufkohlung erreicht wurde. Zudem umfasst das Zahnrad im Bereich seiner Außenrandzonen auch Bereiche mit einem geringerem Aufkohlungsgrad. Die Abstimmung des Aufkohlungsgrades des Werkstückst wird durch Gestaltung der Interimsgeometrien bewerkstelligt. Diese Interimsgeometrien werden im Rahmen spanabhebender Bearbeitungsschritte vom Zahradgrundkorpus abgetragen, wobei dieser Abtrag erst nach Durchführung einer Abschreckpresshärtung erfolgt. Dieser Ansatz ermöglicht es, über die Interimsgeometrien Strukturen bereitzustellen über welche der Werkstückverzug im Rahmen der Abschreckpresshärtung reduziert werden kann. Die Randschichten mit geringerem Aufkohlungsgrad erstrecken sich vorzugsweise im Seitenbereich des Zahnrades. Der Abtrag der Interimsgeometrien ist vorzugsweise auf spanabhebendem Wege bewerkstelligt und die entsprechende Bearbeitung erfasst vorzugsweise die quer zur Zahnradzentralachse ausgerichteten Seitenbereiche der Zähne. Ein gespanntes Werkstück kann im Sinne der Erfindung auch als ein aufgeschrumpftes, insbesondere als ein auf einen Dorn aufgeschrumpftes Werkstück beschrieben werden.

### Kurzbeschreibung der Figuren

Weitere Einzelheiten und Merkmale der Erfindung ergeben sich aus der nachfolgenden Beschreibung in Verbindung mit der Zeichnung. Es zeigt:
- **Figur 1**: ein Ablaufdiagramm zur Veranschaulichung des Ablaufs eines erfindungsgemäßen Fertigungsverfahrens;
- **Figur 2**: eine vereinfachte Axialschnittdarstellung zur Veranschaulichung der Spannung des Werkstückes in einer Härtepresse unter Nutzung der als Aufkohlungsschutz fungierenden Interimsgeometrien des Werkstücks;
- **Figur 3**: eine Detaildarstellung zur Veranschaulichung der durch Aufkohlung generierten Schicht und der Lage und Wirkung der Interimsgeometrie.

### Ausführliche Beschreibung der Figuren

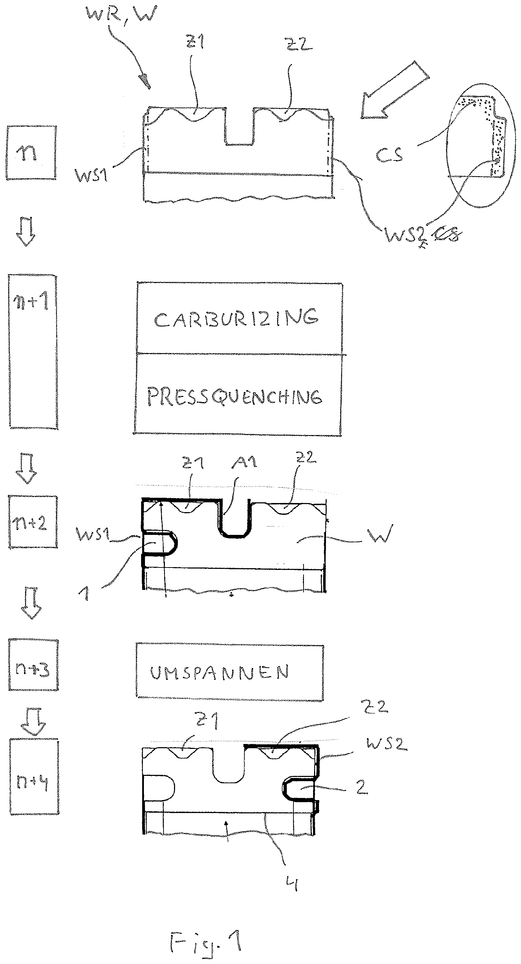

Die Darstellung nach Figur 1 veranschaulicht den Ablauf eines erfindungsgemäßen Verfahrens zur Fertigung eines erfindungsgemäßen Werkstücks W. Im Schritt n wird hierbei ein Werkstückrohling WR für das zu fertigende Werkstück W bereitgestellt, dessen Übermaß so abgestimmt ist, dass im Bereich der Verzahnung Z1, Z2 entweder kein weiterer Materialabtrag oder nur noch ein Materialabtrag - insbesondere in Form einer Schleifbearbeitung - zu erfolgen hat, der geringer ist, als eine im nachfolgend noch näher beschriebenen Schritt n+1 gebildete Aufkohlungsschicht CS. Zudem umfasst der Werkstückrohling WR sog. Interimsgeometrien WS1, WS2, die als Aufkohlschutz fungieren und im Rahmen folgender Fertigungsschritte vollständig oder zumindest weitgehend abgetragen werden.

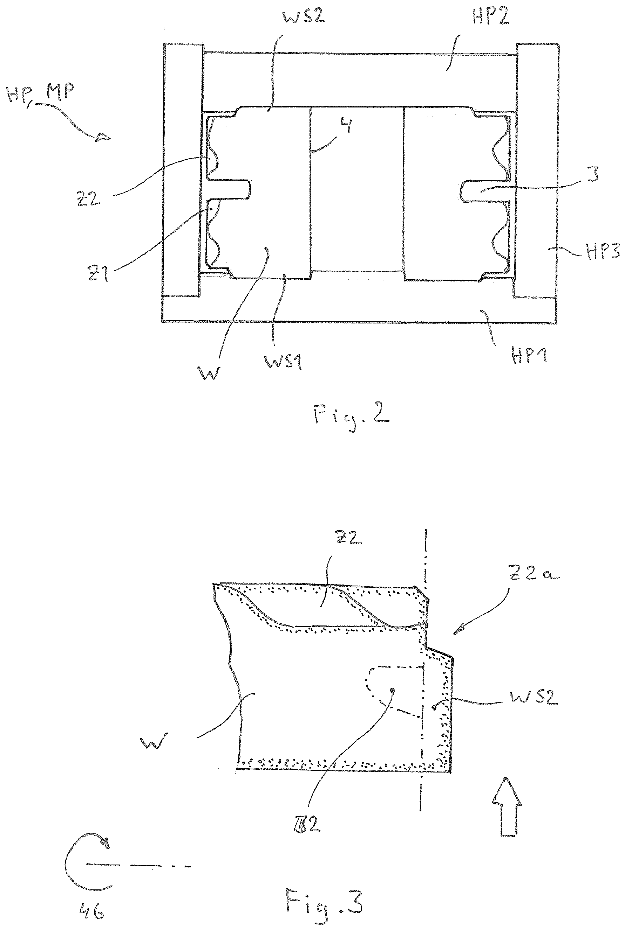

Der im Verfahrensstadium des Schrittes n bereitgestellte Werkstückrohling WR wird nunmehr im Schritt n+1 einer Aufkohlungsbehandlung unterzogen, in welcher sich im gesamten Grenzbereich zur Außenfläche eine Schicht CS mit erhöhtem Kohlenstoffgehalt ergibt. Das zur Aufkohlung aufgeheizte Werkstück W wird nach Ablauf einer bestimmten Aufkohlungsdauer mit einem Handhabungssystem in eine Härtepresse (vgl. Härtepresse HP, Fig.2) verbracht, in der Härtepresse gespannt und unmittelbar nach der Spannung in der der Härtepresse definiert abgeschreckt. Die Handhabungsparameter für das Verbringen des Werkstücks in die Härtepresse sind vorzugsweise für baugleiche Werkstücke standardisiert so dass der Einfluss der Verbringung des jeweiligen Werkstücks in die Härtepresse stets gleichbleibender Art ist. Die Gesamtgeometrie des Werkstücks W unter Einschluss der Interimsgeometrien WS1, WS2 und die Komplementärgeometrie der Härtematrize sind so aufeinander abgestimmt, dass sich eine gleichförmige axiale Spannung und radiale Abstützung des Werkstücks in der Matrize unter Belassung eines Spaltraums im Bereich der Werksstückverzahnungen Z1, Z2 ergibt.

Nach Abkühlung des Werkstückes in der Härtepresse wird das Werkstück der Härtepresse entnommen, gereinigt und vermessen. Für das Werkstück W werden Spannparameter anhand der erfassten geometrischen Eigenschaften ermittelt und das Werkstück W wird in einer Bearbeitungsmaschine derart gespannt, dass sich für die Verzahnung Z1, Z2 eine optimale Lage zu den im Rahmen der folgenden Bearbeitung ergebenden Flächen ergibt.

In der Bearbeitungsmaschine erfolgt im Schritt n+2 ein Abtrag A1 der aufgekohlten und zudem pressgehärteten ersten Interimsgeometrie WS1 von einem ersten Seitenbereich des aufgekohlten und abschreckpressgehärteten Werkstücks W. Weiterhin wird hierbei ein in den nicht aufgekohlten Korpus des Zahnrades vordringender erster Einstich 1 gebildet.

Nach dieser ersten Bearbeitung des aufgekohlten und abschreckpressgehärteten Werkstücks wird dieses im Schritt n+3 in der Bearbeitungsmaschine umgespannt, so dass ein der bereits bearbeiteten Werkstückseite abgewandter Stirnbereich des Werkstücks W im Schritt N+4 materialabtragend, insbesondere spanabhebend bearbeitet werden kann.

Im Schritt n+4 wird die als Aufkohlungsschutz fungierende Interimsgeometrie WS2 abgetragen und ein zweiter Einstich 2 gebildet, der innerhalb des Fußkreises der Verzahnung Z2 in den nicht aufgekohlten Bereich des Werkstücks W eintaucht.

Das derart im Bereich seiner Stirnseiten überarbeitete Werkstück W kann nunmehr einer weiteren Feinbearbeitung, insbesondere einer Endbearbeitung der Verzahnung Z1, Z2 und der Zentralbohrung 4 unterzogen werden.

Gemäß einem besonderen Aspekt des erfindungsgemäßen Verfahrens, können im Rahmen der Schritte n+2 und n+4 die bei dem Abtrag der Interimsgeometrien WS1, WS2 auftretenden Zerspanungskräfte erfasst werden und für eine Bewertung von Eigenschaften des Werkstücks W herangezogen werden. So kann insbesondere im Rahmen der Ausbildung der Einstiche 1, 2 der Schneidkraftbedarf unter Zuordnung zur Abtragsstelle aufgezeichnet werden und für die Bewertung der Aufkohlung und der Presshärtung herangezogen werden.

Die Darstellung nach Figur 2 zeigt vereinfacht die Spannung des Werkstückes W in einer Härtepresse HP unter Nutzung der Interimsgeometrien WS1, WS2 als Spann- und Positionierungsflächen. Die Härtepresse HP umfasst ein Untergesenk HP1 ein Obergesenk HP2 und eine Seitenführung HP3. Das Werkstück W wird in der Härtepress HP durch die als Aufkohlschutz fungierenden Interimsgeometrien WS1, WS2 gespannt. Im Untergesenk HP1 und im Obergesenk HP2 sind hierbei Komplementärgeometrien vorgesehen, die auf die Geometrie des Werkstücks W einschließlich des Aufkohlschutzes WS1, WS2 abgestimmt sind. Der Aufkohlschutz WS1, WS2 und die Gesenke HP1, HP2 stellen Kraftübertragungsgeometrien bereit, durch welche sich eine für die Abschreckpresshärtung des Werkstücks W optimale Spannung des Werkstücks W in der Matrize MP ergibt.

Soweit es sich bei dem erfindungsgemäßen Werkstück W um ein zweireihig schräg verzahntes Zahnrad für ein als Umlaufrädergetriebe gestaltetes Triebwerksgetriebe handelt, umfasst dieses die beiden Verzahnungen Z1, Z2, einen radialen Einstich 3, die Interimsgeometrien WS1, WS2 und eine Bohrung 4. Die Bohrung 4 und Verzahnung Z1, Z2 stellen dabei die Geoemtrien dar, bezüglich deren Planlauf und Rundlauf maßhaltig sein müssen.

Bei der Umsetzung des erfindungsgemäßen Konzeptes wurde festgestellt, dass die Eigenspannung des Zahnrades nach dem Abdrehen der Interimsgeometrien WS1, WS2 keinen Verzug bewirken, d.h. es "springt" nach dem Abdrehen nicht auf. Die Erfindung basiert hierbei auf der Erkenntnis dass es möglich ist, das Aufkohlen und das Presshärten zusammenzufassen und den Aufkohlschutz WS1, WS2 noch für das Presshärten zu belassen da die hiermit erreichten Vorteile den Aufwand für die Bearbeitung des Werkstücks nach dessen Härtung überwiegen und sich auch nach dem Härten noch die gesamte Kontur hinreichend bearbeiten lässt. Diese Erkenntnis ist wegweisend, da die Zähne des Zahnrades im "unterbrochenen Schnitt" gefertigt werden, welches hohe Anforderungen an den Drehprozess darstellt.

Die Darstellung nach Figur 3 veranschaulicht die Gestalt eines als zweireihig schräg verzahntes Zahnrad gestalteten erfindungsgemäßen Werkstücks W weiter. Insbesondere für die Bildung des Einstichs 2 und das Planen im Bereich der Stirnseiten Z2a der Verzahnung Z2 ergeben sich hohe Anforderungen an den Bearbeitungsprozess. Der Einstich 2 ist nötig, um einerseits das Gewicht des Zahnrades W zu reduzieren und andererseits das Schwingungsverhalten zu optimieren. Das Schwingungsverhalten ist optimiert, da hierdurch eine größere Nachgiebigkeit des Zahnrades W in der Hochrichtung der Zähne Z2 bewirkt ist und somit das Dämpfungsverhalten verbessert ist.

Bei dem erfindungsgemäßen Herstellungsverfahren liegt das Zahnrad W nach der Wärmebehandlung in gehärtetem Zustand vor und umfasst die aufgekohlte Randschicht CS und ist zudem pressgehärtet. Es ist damit insgesamt schwer bearbeitbar, da in dem gesamten Außenbereich des Zahnrades W aufgrund der Randschicht CS und der Abschreckpresshärtung eine gehärtete Zone vorliegt. Eine weitere Idee des erfindungsgemäßen Fertigungsverfahrens sieht vor, dass durch Bereitstellung der Interimsgeometrie WS2 der "Einstieg" in die Fertigung des Einstiches 2 erleichtert wird. Die sich hier als Absatz oder axialer Überstand darstellende Interimsgeometrie WS2 erleichtert die Fertigung des Einstichs 2, da der harte Absatz in Radialrichtung durch "Abzeilen" leicht abgetragen werden kann. Das Zahnrad W dreht sich dabei immer in Drehrichtung. Nach Abdrehen der Interimsgeometrie WS2 ist ein axiales Einstechen in die weichere Zone des Werkstücks W dann problemlos möglich.

Die Drehrichtung des Zahnrades W ist durch das Bezugszeichen 46 symbolisiert. "Einfahren" bedeutet ein Einfahren des Schneidwerkzeuges in radialer Richtung von außen oder innen her in das Zahnrad W. Abzeilen bedeutet ein sukzessives Abtragen der Interimsgeometrie WS!, WS2 nach axialem Anstellen des Schneidwerkzeuges auf Spantiefe und anschließendem radialem Vorschub desselben.

Insgesamt nutzt das erfindungsgemäße Konzept eine Zusammenfassung von Einzelmaßnahmen. So erfolgt ein:
- Zusammenfassen der Wärmebehandlungsverfahren;
- Zusammenfassen der Hartbearbeitungsverfahren;
- Drehen sämtlicher Außenflächen des Zahnrades (trotz unterbrochenem Schnitt);
- Vorsehen der Absätze WS1, WS2, um eine Fertigung der Einstiche 1, 2 zur erleichtern.

In vorteilhafter Weise sind in dem erfindungsgemäßen Bearbeitungsverfahren mehrere Bearbeitungsschritte zusammengefasst, sodass sich eine Reduktion der erforderlichen Bearbeitungsschritte ergibt. Somit wird zum einen die Bearbeitung des Bauteils vereinfacht und andererseits das Handling an sich vereinfacht. Es können somit insgesamt zahlreiche Drehbearbeitungs- und Messverfahrensschritte sowie Handlings- und Versandoperationen zwischen den einzelnen Schritten eingespart werden, insgesamt können 4 Schleifprozesse und 2 Drehbearbeitungsschritte eingespart werden. Zudem wird die Qualität des als Doppelschrägverzahntes-Zahnrades fungierenden Werkstücks verbessert, da das Bauteil weniger oft umzuspannen ist und somit die Toleranzen bezüglich Plan- und Rundlauf besser eingehalten werden können. Es ist bislang unversucht geblieben bei hohen Toleranzanforderungen, wie sie bei Doppeltschrägverzahnten-Zahnrädern für Flugzeugtriebwerke einzuhalten sind ein Drehen von hartbearbeitetem Material durchzuführen. Insbesondere die Fertigung des Kopfkreisdurchmessers (unterbrochener Schnitt) als auch die Fertigung der Einstich 1, 2 stellen dabei im hartbearbeiteten Zustand eine fertigungstechnische Herausforderung dar.

Durch das erfindungsgemäße Konzept ergibt sich ein wirtschaftliches Einsparungspotential indem die Anzahl der nötigen Einspannvorgänge reduziert ist und dadurch, dass das Doppelschrägverzahnte-Zahnrad weniger oft auszurichten ist. Des Weiteren ist die Anzahl der notwendigen Handling-Vorgänge reduziert. Zusammenfassend ist festzuhalten, dass durch das erfindungsgemäße Bearbeitungsverfahren zahlreiche Prozessschritte eingespart werden können und die Bearbeitungsqualität des Doppelschrägverzahnten-Zahnrades insgesamt verbessert ist, da ein Einspannen weniger oft nötig ist und die Toleranzen somit genauer eingehalten werden können.

## Patentansprüche

1. Verfahren zur Fertigung wärmebehandelter Werkstücke bei welchem:
- im Rahmen eines der Aufkohlung dienenden Verfahrensabschnittes das Werkstück aufgeheizt wird und Kohlenstoff unter Ausbildung einer Randschicht in das Werkstück eindiffundiert,
- das Werkstück einer Presshärtebehandlung unterzogen wird, in deren Rahmen das Werkstück gespannt und in gespanntem Zustand abgeschreckt wird, wobei
- die Aufkohlung Interimsgeometrien des Werkstücks erfasst, die als Absorptionszonen fungieren,
- die Interimsgeometrien im Rahmen nachfolgender Bearbeitungsschritte abgetragen werden, und
- die Presshärtebehandlung zeitlich nach der Aufkohlung des Werkstücks und ebenfalls zeitlich vor dem Abtrag der Interimsgeometrien bewerkstelligt wird.

2. Verfahren nach Anspruch 1, **dadurch gekennzeichnet, dass** die Interimsgeometrien derart ausgelegt sind, dass deren normal zur Außenfläche gemessene Stärke wenigstens der Hälfte der Aufkohlschichtdicke entspricht.

3. Verfahren nach Anspruch 1 oder 2, **dadurch gekennzeichnet, dass** das aufgekohlte Werkstück ohne Zwischenkühlung auf das zur Presshärtung vorgesehene Temperaturniveau gebracht wird.

4. Verfahren nach wenigstens einem der Ansprüche 1 bis 3, **dadurch gekennzeichnet, dass** das Werkstück im Rahmen der Presshärtung im Zusammenspiel mit den als Absorptionszonen fungierenden Interimsgeometrien gespannt wird.

5. Verfahren nach wenigstens einem der Ansprüche 1 bis 4, **dadurch gekennzeichnet, dass** im Zusammenspiel mit der Spannung des Werkstücks über die Interimsgeometrien ein Spaltraum in dem Presswerkzeug eingehalten wird, der von einem Abschreckmedium durchströmt wird.

6. Verfahren nach wenigstens einem der Ansprüche 1 bis 5, **dadurch gekennzeichnet, dass** die als Absorptionszonen fungierenden Interimsgeometrien sich als zu einer Zentralachse des Werkstücks konzentrische Toroide darstellen.

7. Verfahren nach wenigstens einem der Ansprüche 1 bis 6, **dadurch gekennzeichnet, dass** das Werkstück ein Stirnrad ist und die Toroide sich auf einander abgewandten Stirnseiten des Stirnrades unterhalb des Fußkreises der Verzahnung erstrecken.

8. Zahnrad mit einer im Bereich der Verzahnung aufgekohlten Randschicht, sowie spanabhebend bearbeiteten Außenbereichen mit Randschichten mit geringerem Aufkohlungsgrad, wobei
- dieser geringere Aufkohlungsgrad durch Abtrag von aufgekohlten Interimsgeometrien bewerkstelligt ist und
- diese Interimsgeometrien im Rahmen einer Abschreckpresshärtung des Zahnrades noch Bestandteil desselben gebildet haben.

9. Zahnrad nach Anspruch 8, **dadurch gekennzeichnet, dass** sich die Randschichten mit geringerem Aufkohlungsgrad im Seitenbereich des Zahnrades erstrecken.

10. Zahnrad nach Anspruch 8 oder 9, **dadurch gekennzeichnet, dass** der Abtrag der Interimsgeometrien durch spanabhebende Bearbeitung bewerkstelligt ist und diese Bearbeitung den Seitenbereich der Zähne mit erfasst.
